# FASCICULE DE BREVET EUROPEEN

(11) **EP 3 280 601 B1**
(45) Date de publication et mention de la délivrance du brevet: **09.06.2021**
(21) Numéro de dépôt: 16714432.8
(22) Date de dépôt: 06.04.2016
(51) Int. Cl.: B60C 23/04, B60C 23/06, G06K 19/077, B29D 30/00

(54) **PNEUMATIQUE MUNI D'UN DISPOSITIF ÉLECTRONIQUE**
ELEKTRONISCHER VORRICHTUNG AUSGESTATTETER REIFEN
TYRE PROVIDED WITH AN ELECTRONIC DEVICE

(30) Priorité: 09.04.2015 FR 1553041
(43) Date de publication de la demande: 14.02.2018
(73) Titulaire: Compagnie Générale des Etablissements Michelin, 63000 Clermont-Ferrand (FR)
(72) Inventeur: BRUNEAU, François-Xavier, 63040 Clermont-Ferrand Cedex 9 (FR); FAGOT-REVURAT, Lionel, 63040 Clermont-Ferrand Cedex 9 (FR)
(74) Mandataire: Millanvois, Patrick Jacques Jean
(86) Numéro de dépôt international: PCT/EP2016/057461
(87) Numéro de publication internationale: WO 2016/162345

(56) Documents cités:
- WO-A1-2015/045460
- JP-A- 2006 021 611
- US-A1- 2007 151 334
- US-A1- 2008 053 582
- US-B1- 6 255 940

## Description

### DOMAINE DE L'INVENTION

La présente invention concerne un pneumatique asymétrique à l'intérieur duquel est installé un dispositif électronique et ce pour tout type de véhicule. L'invention concerne plus particulièrement les pneumatiques de tourisme.

Un pneumatique comprend un sommet comprenant une bande roulement destinée à venir en contact avec le sol par l'intermédiaire d'une surface de roulement, deux bourrelets destinés à venir en contact avec une jante et deux flancs reliant le sommet aux bourrelets.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien.

Dans ce qui suit, les expressions « radialement intérieur à» et « radialement extérieur à» signifient respectivement « plus proche de l'axe de rotation du pneumatique, selon la direction radiale, que » et « plus éloigné de l'axe de rotation du pneumatique, selon la direction radiale, que ». Les expressions « axialement intérieur à» et « axialement extérieur à» signifient respectivement « plus proche du plan équatorial, selon la direction axiale, que » et « plus éloigné du plan équatorial, selon la direction axiale, que ». Une « distance radiale » est une distance par rapport à l'axe de rotation du pneumatique, et une « distance axiale » est une distance par rapport au plan équatorial du pneumatique. Une « épaisseur radiale » est mesurée selon la direction radiale, et une « largeur axiale » est mesurée selon la direction axiale.

Par pneumatique asymétrique, on entend des pneumatiques tels qu'un sens de montage sur le véhicule est prédéterminé par le fabricant. Ils comportent un bord axial extérieur et un bord axial intérieur, le bord axial intérieur étant le bord destiné à être monté du côté de la caisse du véhicule lorsque le pneumatique est monté sur le véhicule selon ledit sens de montage prédéterminé et inversement pour le bord axial extérieur. Dans le document « côté extérieur du véhicule » désigne le bord axial extérieur.

Généralement le matériau le plus radialement intérieur sur toutes les parties du pneumatique, flancs, bourrelets et sommet, est conçu pour assurer l'étanchéité du pneumatique afin de maintenir une pression constante et également pour préserver les autres matériaux lui étant radialement extérieurs des effets du gaz de gonflage, notamment de l'oxygène. Ce matériau le plus radialement intérieur, quelle que soit sa nature, est appelé gomme intérieure.

### ARRIÈRE-PLAN

Il est souvent intéressant de venir installer à l'intérieur du pneumatique, comme le décrivent les documents. US2007/0151334, US20110041309A1, US2011/0041977A1, US2011/0113630A1 et particulièrement sur la gomme intérieure, un dispositif électronique qu'il soit un capteur électronique, tel en particulier qu'un capteur de pression, de température, un accéléromètre ou un système d'identification (RFID). Ces dispositifs électroniques ont pour objet d'envoyer à des récepteurs situés ou pas dans le véhicule, à la demande ou de manière continue, des informations sur le pneumatique, ses paramètres de roulage ou un code d'identification. Les informations reçues peuvent servir, entre autres, à informer le conducteur, par exemple d'une variation de pression, de la valeur d'une température, à régler les paramètres du véhicule en temps réel ou à aider le professionnel qui en a la charge à la gestion de l'entretien du pneumatique ou du véhicule. Entre le dispositif électronique et la gomme intérieure, il existe un matériau permettant l'adhésion de l'objet au pneumatique généralement un mélange polymérique appelé mélange d'interface.

Ces dispositifs comme le montre le document JP2011020557, US2008/0053582 ont parfois été installés sur le bourrelet qui est la zone la plus statique du pneumatique au roulage. Cependant le montage et le démontage d'un pneumatique est tel que le bourrelet subit des déformations rendant difficile cette installation.

Concernant les flancs, ce sont les zones qui subissent le plus de déformations lors du roulage et donc ils sont eux aussi des zones peu favorables pour accueillir ce type de dispositif.

Dans les solutions où le dispositif électronique est placé sous le sommet, telle US2011/0041309 A1, JP2006 021611, WO2015045460, il est positionné dans le plan équatorial du pneumatique. En effet, cette position a l'avantage de la symétrie et permet de s'affranchir de la position de montage du pneumatique sur le véhicule, mais elle ne permet pas d'obtenir les performances souhaitées en termes de tenue à la vitesse par certains constructeurs de véhicules dit sportifs. En effet pour améliorer la tenue de route de ces véhicules, ces derniers ont souvent un carrossage important qui a pour conséquence une dissymétrie de l'aire de contact. Ces deux caractéristiques ont pour conséquence l'utilisation de pneumatiques asymétriques pour les véhicules dit sportifs. Pour les pneumatiques asymétriques dans cet usage, le positionnement du dispositif électronique dans le plan équatorial n'est plus un optimum.

Une des difficultés pour installer un dispositif électronique dans le pneumatique sur les flancs, les bourrelets ou à l'équateur sous le sommet, est que sa présence est défavorable à l'endurance du pneumatique notamment à haute vitesse en raison des efforts et des déformations qu'il subit.

### RÉSUMÉ DE L'INVENTION

L'objectif principal de la présente invention est donc d'augmenter l'endurance à haute vitesse d'un pneumatique asymétrique comportant un dispositif électronique.

Cet objectif est atteint par un pneumatique d'une largeur axiale maximale LT, destiné à être monté sur une jante de montage, comprenant :
- deux bourrelets, destinés à entrer en contact avec la jante de montage, un sommet comprenant une bande de roulement destinée à être en contact avec un sol, deux flancs reliant le sommet aux bourrelets,
- la bande de roulement asymétrique selon le plan équatorial, délimitant deux bords axiaux de la bande de roulement et dont l'un des bords est destiné à être positionné du côté extérieur d'un véhicule sur lequel la jante de montage est fixée,
- une gomme intérieure du sommet la plus radialement intérieure au sommet,
- un dispositif électronique ; le dispositif électronique étant installé dans le pneumatique sous le sommet, radialement intérieurement à la gomme intérieure du sommet, du côté du bord axial de la bande de roulement destiné à être positionné du côté extérieur au véhicule par rapport au plan équatorial.

La largeur axiale maximale du pneumatique est mesurée au niveau des flancs, le pneumatique étant monté sur sa jante et faiblement gonflé, c'est-à-dire gonflé à une pression égale à 10% de la pression nominale telle que recommandée, par exemple, par la Tire and Rim Association ou TRA.

Les efforts ou les déformations qui sont appliqués au dispositif électronique sont importants que ce soit lors du montage du pneumatique sur la jante ou lors de l'utilisation. En particulier, la force centrifuge qui s'exerce dans le pneumatique au roulage est telle que la partie la plus adaptée à l'installation d'un tel dispositif est le sommet. Dans ce cas, la force centrifuge a pour conséquence la compression du mélange d'interface, déformation pour laquelle les matériaux polymériques ont une résistance élevée et non un cisaillement, déformation pour laquelle les matériaux polymériques ont une résistance plus faible. Pour un positionnement sur les bourrelets et les flancs, la force centrifuge a pour conséquence des efforts de cisaillement du mélange d'interface élevés, défavorables à son endurance, ceci pouvant entrainer le décollement du dispositif électronique.

En revanche l'installation du dispositif électronique dans le plan équateur n'est intéressante que sous une sollicitation symétrique. Lors d'un virage, les pneumatiques situés du côté du centre de rotation instantané du véhicule par rapport au centre de gravité du véhicule sont délestés de la charge par l'effet de la force centrifuge et donc la sollicitation sur ces pneumatiques n'est pas la sollicitation maximale que le pneumatique ait à subir et donc également l'interface entre le dispositif électronique et le pneumatique. En revanche les pneumatiques situés du côté opposé du centre de rotation instantané du véhicule par rapport au centre de gravité du véhicule, dit extérieur du virage, sont soumis à un transfert de charge qui fait de cette situation la condition la plus pénalisante de l'usage du pneumatique. Sous l'effet de cette charge, l'aire de contact subit une déformation proche d'un carrossage et telle que la partie de bande de roulement située au niveau de l'équateur subit un effort circonférentiel non nul qui s'équilibre avec l'effort circonférentiel de sens opposé situé sur la partie du bord axial extérieur de la bande de roulement côté extérieur du véhicule. Entre ces deux zones, l'équateur et le bord axial côté extérieur du véhicule, la zone de la bande de roulement est une zone où l'effort circonférentiel est le plus faible. C'est donc la zone la plus adaptée où installer un dispositif électronique. Quand le pneumatique subit un carrossage important du fait de la configuration du véhicule, cette même zone est également la plus adaptée pour installer un dispositif électronique.

Un des modes de réalisation préféré est que le dispositif électronique comprenne au moins un capteur de mesure permettant de mesurer au moins un paramètre du pneumatique. En effet, des dispositifs électroniques particulièrement intéressants pour ce type de pneumatique et d'usage, sont des capteurs de température ou de pression transmettant ces paramètres mesurés dans le pneumatique au conducteur du véhicule afin de le prévenir d'un fonctionnement inapproprié dans l'objectif que ce dernier adapte son mode de conduite, par exemple sa vitesse.

Il est avantageux que la distance axiale entre le centre de gravité du dispositif électronique et le plan équatorial soit au moins égale à 5% de la largeur axiale maximale du pneumatique LT pour éviter la zone la plus sollicitée par les efforts axiaux moteurs, de la partie de la bande de roulement positionnée du côté extérieur au véhicule.

Il est particulièrement avantageux que la distance axiale entre le centre de gravité du dispositif électronique et le plan équatorial soit au plus égale à 25% de la largeur axiale maximale du pneumatique LT pour éviter la zone la plus sollicitée par les efforts axiaux freineurs, de la partie de la bande de roulement positionnée du côté extérieur au véhicule.

Dans un mode de réalisation préféré, le centre de gravité du dispositif électronique est situé radialement à l'aplomb d'une rainure circonférentielle de la bande de roulement. Ce mode de réalisation permet de diminuer la température à l'interface entre le dispositif électronique et le pneumatique et ainsi d'améliorer la tenue du mélange d'interface. En effet, en raison d'une diminution des épaisseurs des matériaux polymériques du pneumatique à l'aplomb d'une rainure circonférentielle, la production de chaleur par déformation de ces matériaux est localement plus faible et donc la température est localement plus basse.

Par rainure, on entend toute zone en creux de la bande de roulement globalement circonférentielle et faisant globalement le tour du pneumatique, délimitée par des parois de matière se faisant face et distante l'une de l'autre d'une distance non nulle, d'une profondeur au moins égale à 2 mm lorsque le pneu est neuf. Ces parois ne peuvent pas venir en contact l'une contre l'autre dans les conditions usuelles de roulage. Une rainure circonférentielle a deux parois de direction globalement circonférentielle, l'une axialement intérieure et l'autre axialement extérieure.

Par un positionnement à l'aplomb de la rainure circonférentielle, on entend que le centre de gravité du dispositif électronique est axialement extérieur à la paroi axialement intérieure de la rainure et axialement intérieur à la paroi axialement extérieure de la rainure avec une tolérance de positionnement axial de 5 mm.

Il est également avantageux que le centre de gravité du dispositif électronique soit situé radialement à l'aplomb d'une nervure de la bande de roulement. En effet, sous fortes sollicitations, les premiers flambements du sommet ne sont pas localisés sous les nervures, mais sous les rainures. Ces flambements génèrent des déformations importantes pouvant détériorer le mélange d'interface entre la gomme intérieure et le dispositif électronique. Dans ce cas, un positionnement du dispositif électronique à l'aplomb d'une nervure améliore l'endurance du mélange d'interface et donc du pneumatique.

Par nervures, on entend un élément en relief formé sur une bande de roulement, cet élément s'étendant dans la direction circonférentielle et faisant globalement le tour du pneumatique, d'une hauteur d'au moins égale à 2 mm lorsque le pneu est neuf. Une nervure comprend deux parois axiales et une face de contact, cette dernière étant destinée à venir en contact avec le sol pendant le roulage. Une nervure circonférentielle a deux parois de direction globalement circonférentielle, l'une axialement intérieure et l'autre axialement extérieure. Une nervure peut ne pas être circonférentiellement continue mais être entaillée notamment dans le cas d'un pneumatique dédié à un usage hivernal.

Par un positionnement à l'aplomb de la nervure, on entend que le centre de gravité du dispositif électronique est axialement extérieur à la paroi axialement intérieure de la nervure et axialement intérieur à la paroi axialement extérieure de la nervure avec une tolérance de positionnement axial de 5 mm.

Avantageusement la position circonférentielle du dispositif électronique est à l'opposé du balourd statique du pneumatique afin de permettre un équilibrage statique et dynamique le plus économique possible. En effet la masse de certains dispositifs électroniques actuels sont proches des pastilles d'équilibrage utilisées pour corriger les répartitions imparfaites de masse, appelées balourd, sur le volume de révolution qu'est le pneumatique et entraînant un déséquilibre. Le dispositif électronique peut donc être utilisé comme une pastille de manière à diminuer la masse restante de pastilles d'équilibrage à ajouter.

L'installation du dispositif électronique requiert une opération de pose, il est donc avantageux qu'au moins une pastille d'équilibrage soit positionnée radialement intérieurement à la gomme intérieure du pneumatique de manière à satisfaire aux exigences d'équilibrage statique et dynamique, durant la même opération dans un objectif de diminution des coûts associés à cette opération. Cette opération d'ajout d'une pastille d'équilibrage est d'autant plus intéressante que la position circonférentielle du balourd statique du pneumatique est déjà déterminée pour positionner le dispositif électronique et ne donc nécessite donc pas une nouvelle détermination .

### BRÈVE DESCRIPTION DES DESSINS

Les caractéristiques et autres avantages de l'invention seront mieux compris à l'aide des figures 1 à 4, les dites figures n'étant pas représentées à l'échelle mais de façon simplifiée, afin de faciliter la compréhension de l'invention :
- La figure 1 représente un pneumatique selon l'art antérieur,
- La figure 2 illustre les termes 'bord intérieur' et 'bord extérieur' d'une bande de roulement,
- Les figures 3 à 4 représentent deux modes de réalisation de l'invention.

### DESCRIPTION DÉTAILLÉE DES DESSINS

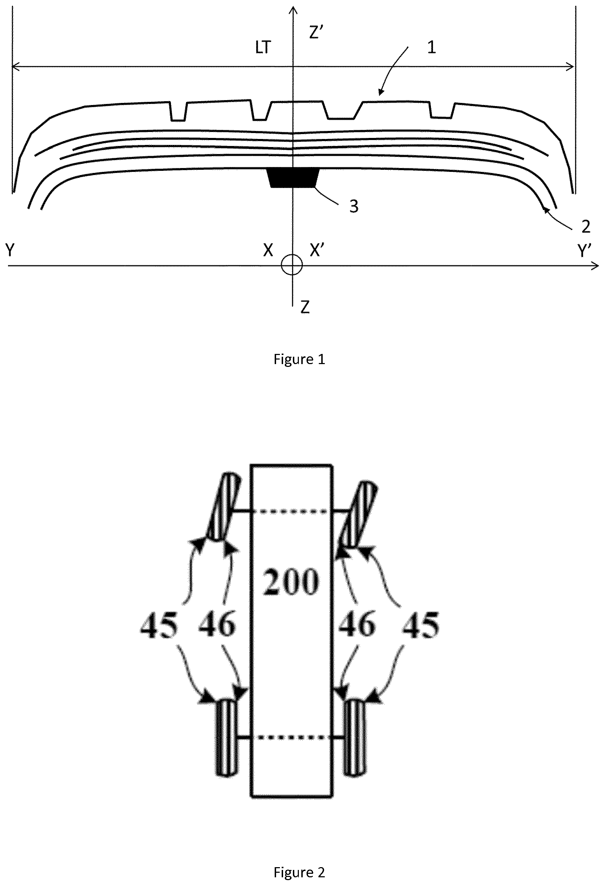

La figure 1 représente un pneumatique vu en coupe méridienne muni d'un dispositif électronique 3 selon l'art antérieur. Le pneumatique comporte une bande de roulement 1, une gomme intérieure 2, radialement intérieure à la bande de roulement et un dispositif électronique 3 radialement intérieur à la gomme intérieure et dont le centre de gravité est dans le plan équatorial, aux précisions de positionnement près.

La figure 2 représente schématiquement des pneumatiques destinés à être montés sur des jantes de montage de roues d'un véhicule 200 et ayant un sens de montage prédéterminé sur le véhicule. Il comporte un bord axial extérieur 45 et un bord axial intérieur 46, le bord axial intérieur 46 étant le bord destiné à être monté du côté de la caisse du véhicule lorsque le pneumatique est monté sur le véhicule selon ledit sens de montage prédéterminé et inversement pour le bord axial extérieur 45.

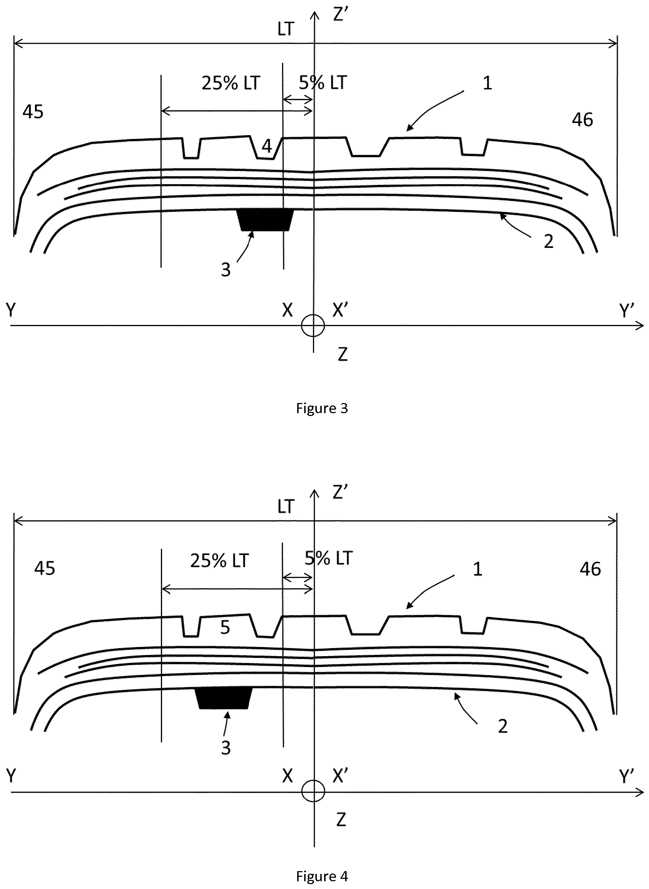

La figure 3 présente un pneumatique vu en coupe méridienne muni d'un dispositif électronique 3 selon l'invention où le centre de gravité du dispositif électronique 3 est situé du côté du bord axial 45 extérieur du véhicule par rapport au plan équatorial et à une distance du plan équatorial au moins égale à 5% de la largeur axiale maximale du pneumatique LT et au plus égale à 25% de cette largeur. Dans cette figure, le centre de gravité du dispositif électronique 3 est situé radialement à l'aplomb de la rainure circonférentielle 4 de la bande de roulement.

La figure 4 présente un pneumatique muni d'un dispositif électronique 3 selon l'invention et où le centre de gravité du dispositif électronique 3 est situé à l'aplomb d'une nervure 5 de la bande de roulement.

Les inventeurs ont réalisé l'invention sur un pneumatique de dimension 305/30ZR20 103Y, asymétrique, de largeur axiale maximale 313 mm, testé avec un angle de carrossage de 2,5° afin de prendre en compte les impératifs techniques d'un véhicule auquel il est spécifiquement dédié. Le test consiste en un roulage sur un volant métallique de 8,5m de circonférence, à une pression de 3,2 bars et une charge de 587 DaN régulées. Le pneumatique roule en paliers de vitesses croissantes, d'une durée de 20 minutes chacun, l'incrément en vitesse est de 10 km/h. Les pneumatiques sont classés en fonction de la vitesse maximale atteinte et de la durée de roulage pendant le dernier palier de vitesse atteint.

Le pneumatique sans le dispositif électronique atteint le palier 370 km/h et roule à cette vitesse pendant 11 minutes. Le pneumatique selon l'état de l'art, à savoir équipé du dispositif électronique, un capteur de pression d'une masse de 7 g, positionné selon l'état de l'art, et donc installé dans le pneumatique de telle sorte que son centre de gravité soit dans le plan équatorial à la tolérance de positionnement près de 1% de la largeur axiale maximale, ce pneumatique atteint le palier de vitesse 340 km/h et a une défaillance au bout d'une minute de roulage à cette condition. Ce résultat comparé à celui du pneumatique non muni du dispositif électronique, démontre la baisse de performance en endurance à très haute vitesse induite par la présence du dispositif électronique. Cette défaillance est liée à l'augmentation de la température dans le sommet de 15°C vue par simulation numérique à l'aplomb du capteur, ceci à la même vitesse entre le pneumatique non muni d'un dispositif électronique et le pneumatique muni du dispositif électronique suivant l'état de l'art.

Les inventeurs ont testé deux réalisations de l'invention. La première réalisation consiste à installer le dispositif électronique à une distance du plan équatorial de 16% de la largeur axiale maximale, à l'aplomb d'une nervure de la bande de roulement. Dans ce cas, le pneumatique selon l'invention atteint le palier de vitesse de 360 km/h et roule pendant 15 minutes sur ce palier. Ceci comparé au résultat du pneumatique muni du dispositif électronique positionné dans le plan équatorial, à savoir palier maximum atteint 340 Km/h, démontre l'amélioration de l'endurance à haute vitesse du pneumatique muni du dispositif électronique tel que décrit par l'invention.

La seconde réalisation consiste à installer le dispositif électronique à une distance du plan équatorial de 7% de la largeur axiale maximale, à l'aplomb d'une rainure de la bande de roulement. Dans ce cas, le pneumatique selon l'invention atteint le palier de vitesse de 370 km/h et roule pendant 15 minutes sur ce palier. La température sommet maximale baisse de près de 15°C. Ce résultat comparé au résultat du pneumatique muni du dispositif électronique positionné dans le plan équatorial, à savoir palier maximum atteint 340 Km/h, montre l'amélioration de l'endurance à haute vitesse du pneumatique muni du dispositif électronique tel que décrit par l'invention selon ce deuxième mode de réalisation.

## Revendications

1. Pneumatique d'une largeur axiale maximale LT, destiné à être monté sur une jante de montage, comprenant :
• deux bourrelets, destinés à entrer en contact avec la jante de montage, un sommet comprenant une bande de roulement (1) destinée à être en contact avec un sol, deux flancs reliant le sommet aux bourrelets,
• la bande de roulement (1) asymétrique selon le plan équatorial, délimitant deux bords axiaux (45, 46) de la bande de roulement et dont l'un des bords (45) est destiné à être positionné du côté extérieur d'un véhicule sur lequel la jante de montage est fixée,
• une gomme intérieure du sommet (2), la plus radialement intérieure au sommet,
• un dispositif électronique (3),
**caractérisé en ce que** le dispositif électronique est installé dans le pneumatique sous le sommet, radialement intérieurement à la gomme intérieure du sommet, du côté du bord axial (45) de la bande de roulement (1) destiné à être positionné du côté extérieur au véhicule par rapport au plan équatorial.

2. Pneumatique selon la revendication 1 **dans lequel** le dispositif électronique (3) comprend au moins un capteur de mesure permettant de mesurer au moins un paramètre du pneumatique.

3. Pneumatique selon l'une quelconque des revendications 1 ou 2 **dans lequel** la distance axiale entre le centre de gravité du dispositif électronique (3) et le plan équatorial est au moins égale à 5% de la largeur axiale maximale du pneumatique LT.

4. Pneumatique selon l'une quelconque des revendications 1 à 3 **dans lequel** la distance axiale entre le centre de gravité du dispositif électronique (3) et le plan équatorial est au plus égal à 25% de la largeur axiale maximale du pneumatique LT.

5. Pneumatique selon l'une quelconque des revendications 1 à 4 **dans lequel** le centre de gravité du dispositif électronique (3) est situé radialement à l'aplomb d'une rainure circonférentielle (4) de la bande de roulement.

6. Pneumatique selon l'une quelconque des revendications 1 à 4 **dans lequel** le centre de gravité du dispositif électronique (3) est situé radialement à l'aplomb d'une nervure de la bande de roulement.

7. Pneumatique selon l'une quelconque des revendications 1 à 6 dans lequel la position circonférentielle du dispositif électronique est à l'opposé du balourd statique du pneumatique.

8. Pneumatique selon l'une quelconque des revendications 1 à 7 dans lequel au moins une pastille d'équilibrage est positionnée radialement intérieurement à la gomme intérieure du pneumatique.

## Patentansprüche

1. Reifen mit einer maximalen axialen Breite LT, der dazu bestimmt ist, auf eine Montagefelge montiert zu werden, beinhaltend:
• zwei Wülste, die dazu bestimmt sind, mit der Montagefelge in Kontakt zu kommen, einen Scheitel, der eine Lauffläche (1) beinhaltet, die dazu bestimmt ist, mit einem Boden in Kontakt zu sein, zwei Flanken, die den Scheitel mit den Wülsten verbinden,
• wobei die Lauffläche (1), die gemäß der Äquatorialebene asymmetrisch ist, zwei axiale Ränder (45, 46) der Lauffläche begrenzt und wobei einer der Ränder (45) dazu bestimmt ist, auf der Außenseite eines Fahrzeugs, an dem die Montagefelge befestigt ist, positioniert zu sein,
• ein Innengummi des Scheitels (2), das zu dem Scheitel radial am weitesten innen liegt,
• eine elektronische Vorrichtung (3),
**dadurch gekennzeichnet, dass** die elektronische Vorrichtung in dem Reifen unter dem Scheitel und zu dem Innengummi des Scheitels radial innen liegend installiert ist, auf der Seite des axialen Rands (45) der Lauffläche (1), der dazu bestimmt ist, bezogen auf die Äquatorialebene auf der Außenseite des Fahrzeugs positioniert zu sein.

2. Reifen nach Anspruch 1, **wobei** die elektronische Vorrichtung (3) mindestens einen Messsensor beinhaltet, der das Messen mindestens eines Parameters des Reifens ermöglicht.

3. Reifen nach einem der Ansprüche 1 oder 2, **wobei** der axiale Abstand zwischen dem Schwerpunkt der elektronischen Vorrichtung (3) und der Äquatorialebene mindestens 5 % der maximalen axialen Breite des Reifens LT beträgt.

4. Reifen nach einem der Ansprüche 1 bis 3, **wobei** der axiale Abstand zwischen dem Schwerpunkt der elektronischen Vorrichtung (3) und der Äquatorialebene höchstens 25 % der maximalen axialen Breite des Reifens LT beträgt.

5. Reifen nach einem der Ansprüche 1 bis 4, **wobei** sich der Schwerpunkt der elektronischen Vorrichtung (3) radial unterhalb einer Umfangsnut (4) der Lauffläche befindet.

6. Reifen nach einem der Ansprüche 1 bis 4, **wobei** sich der Schwerpunkt der elektronischen Vorrichtung (3) radial unterhalb einer Rippe der Lauffläche befindet.

7. Reifen nach einem der Ansprüche 1 bis 6, wobei sich die Umfangsposition der elektronischen Vorrichtung zu dem statischen Unwuchtelement des Reifens entgegengesetzt befindet.

8. Reifen nach einem der Ansprüche 1 bis 7, wobei mindestens ein Ausgleichsgewicht zu dem Innengummi des Reifens radial innen liegend positioniert ist.

## Claims

1. Tyre with a maximum axial width LT, intended to be mounted on a mounting rim, comprising:
• two beads, intended to come into contact with the mounting rim, a crown comprising a tread (1) intended to be in contact with the ground, two sidewalls connecting the crown to the beads,
• the tread (1), asymmetric about the equatorial plane, delimiting two axial edges (45, 46) of the tread, one of which edges (45) is intended to be positioned on the outboard side of a vehicle on which the mounting rim is fixed,
• an inner liner of the crown (2) which is radially furthest on the inside of the crown,
• an electronic device (3),
**characterized in that** the electronic device is installed in the tyre under the crown, radially on the inside of the inner liner of the crown, on the side of the axial edge (45) of the tread (1) that is intended to be positioned on the outboard side of the vehicle with respect to the equatorial plane.

2. Tyre according to Claim 1, **in which** the electronic device (3) comprises at least one measurement sensor making it possible to measure at least one parameter of the tyre.

3. Tyre according to any one and Claims 1 and 2, **in which** the axial distance between the centre of gravity of the electronic device (3) and the equatorial plane is at least equal to 5% of the maximum axial width of the tyre LT.

4. Tyre according to any one of Claims 1 to 3, **in which** the axial distance between the centre of gravity of the electronic device (3) and the equatorial plane is at most equal to 25% of the maximum axial width of the tyre LT.

5. Tyre according to any one of Claims 1 to 4, **in which** the centre of gravity of the electronic device (3) is situated radially in line with a circumferential groove (4) in the tread.

6. Tyre according to any one of Claims 1 to 4, **in which** the centre of gravity of the electronic device (3) is situated radially in line with a rib of the tread.

7. Tyre according to any one of Claims 1 to 6, **in which** the circumferential position of the electronic device is opposite the static out-of-balance of the tyre.

8. Tyre according to any one of Claims 1 to 7, **in which** at least one balancing weight is positioned radially on the inside of the inner liner of the tyre.
